# EUROPEAN PATENT SPECIFICATION

(11) **EP 1 885 476 B1**
(45) Date of publication and mention of the grant of the patent: **08.07.2015**
(21) Application number: 06760389.4
(22) Date of filing: 25.05.2006
(51) Int. Cl.: B01D 67/00, B01D 69/14, B01D 71/36

(54) **MULTI-FUNCTIONAL COATINGS ON MICROPOROUS SUBSTRATES**
MULTIFUNKTIONELLE ÜBERZÜGE AUF MIKROPORÖSEN SUBSTRATEN
REVETEMENTS MULTIFONCTIONNELS DEPOSES SUR DES SUBSTRATS MICROPOREUX

(30) Priority: 25.05.2005 US 684698 P
(43) Date of publication of application: 13.02.2008
(73) Proprietor: Gore Enterprise Holdings, Inc., Newark, DE 19714-9206 (US)
(72) Inventor: FREESE, Donald, Chadds Ford, PA 19317 (US); NANDI, Manish, K., Malvern, PA 19355 (US)
(74) Representative: Shanks, Andrew
(86) International application number: PCT/US2006/020322
(87) International publication number: WO 2006/127946

(56) References cited:
- EP-A- 1 239 000
- EP-A2- 0 372 697
- WO-A-00/66655
- US-A1- 2004 213 918
- US-B1- 6 326 326
- SING K S W ET AL: "Reporting Physisorption Data for Gas/Solid Systems with Special Reference to the Determination of Surface Area and Porosity", PURE & APPLIED CHEMISTRY, PERGAMON PRESS, OXFORD, GB, vol. 57, no. 4, 1 January 1985 (1985-01-01), pages 603-619, XP001181366, ISSN: 0033-4545

## Description

### FIELD OF THE INVENTION

The present invention relates to microporous substrates having a multi-functional coating thereon.

### BACKGROUND OF THE INVENTION

Coated microporous substrates are used in many applications to take advantage of the properties of the microporous substrate while also taking advantage of the functionality of the coating material for a variety of applications.

Substrates of particular interest are polytetrafluoroethylene ("PTFE") and microporous polytetrafluoroethylene. Due to the inherent hydrophobicity of PTFE, membranes of these materials are of particular interest when in the form of repellant products such as rainwear. Expanded microporous, liquid waterproof polytetrafluoroethylene materials, such as those available from W. L. Gore and Associates, Inc., sold under the trademark GORE-TEX®, as well as expanded PTFE products available from other suppliers, are especially well suited for this purpose. The expanded PTFE materials are liquid waterproof, but allow water vapor, such as perspiration, to pass through. Polyurethanes and other polymers have been used for this purpose also.

U.S. Patent No. 4,194,041 describes the use of an additional coating on microporous polymers which is based on a thin, air-impermeable coating composed of a polyetherpolyurethane or polyperfluorosulfonic acid that transports water vapor molecules by diffusion. The thin coating completely fills at least a portion of the pores in the microporous structure. The thin coating is employed to reduce transmission of surface active agents and contaminating substances through the polymers. Owing to the chemical structure of the polymer, this monolithic coating on the microporous structure exhibits a high transport of water molecules, (high permeability to water vapor) through the polymeric material.

Suitable coatings for microporous low surface energy materials are described in the art, many of which rely on solvents to wet the desired substrate. For example, EP 0581168 (Mitsubishi) describes the use of perfluoroalkyl methacrylates and perfluoroalkylethyl acrylates to coat porous polyethylene and polypropylene membranes where the coated substances are held in physical contact with the surface of the polyolefin porous membrane. To produce these coated porous membranes, the fluorinated monomer or fluorinated monomer and a crosslinking monomer together with a polymerization initiator are dissolved in a suitable solvent to produce a solution. For example, this solution typically may comprise about 15% wt. monomer and 85% wt. acetone. This solvent solution is coated onto the porous substrate. After coating, the solvent is vaporized off.

In a similar solvent-rich situation, a process for treating the surfaces of polymers with essentially pure solvent solutions containing low concentrations (e.g. less than 1.0% wt.) of amorphous fluoropolymers has also been reported (WO 92/10532).

In yet another similar manner, solutions of fluorine-containing polymers are also involved in a patent for coating ePTFE with an amorphous copolymer of tetrafluoroethylene (EP 0561875). In each of these cases, significant quantities of solvent are released during the coating coalescence process. These solvent emissions are both costly and environmentally undesirable.

U.S. Patent No. 6,228,477 teaches a means to coat a low surface energy, microporous PTFE substrate with an otherwise non-wetting, aqueous fluoropolymer dispersion through the use of significant percentages of isopropanol ("IPA").

U.S. Patent No. 5,460,872, to Wu et. al., teaches the use of fluorinated surfactants to lower the surface energy and contact angle with microporous PTFE as a means to produce a uniformly coated microporous PTFE substrate.

Other patents and publications (e.g., WO 91/01791 (Gelman Sciences Technology; EP 0561277 (Millipore)/U.S. Patent No. 5,217,802) propose treating a porous membrane with a fluorine-containing monomer and a crosslinker. The treatment is followed by polymerization.

Perfluoropolyethers in conjunction with ePTFE for use as water-repellent finish are mentioned in WO 92/21715. In addition, U. S. Patent No. 6,676,993 teaches a process that uses a mixture of isopropanol and water to wet microporous ePTFE substrates and when specific fluoroacrylates are dispersed in this solvent-laden solution, it can be used to coating to the ePTFE surfaces it wets.

While particles have conventionally been incorporated into ePTFE structures, they have not been incorporated in coatings which effectively bind the particles to the pore walls of the microporous structure. For example, U. S. Patent No. 5,279,742 teaches enmeshing carbon particles in the nodes and fibrils of ePTFE films for use as an extraction medium. European Patent No. EP 0528998B1 teaches the mechanical entrapment of therapeutic microspheres in an ePTFE matrix as a way to deliver drug therapy in a periodontal patch.

To date, microporous substrate coating technologies have focused on depositing a single homogenous material on the microstructure of the microporous substrate. Solvent wetting systems and aqueous wetting systems (e.g., such as described in U. S. Patent No. 6,228,477, etc.) have not been compatible with a range of additives or multiple additives. Typically, these wetting systems have been compatible with isolated, unique oleophobic monomer, polymers or emulsions. A need has existed for added flexibility in coating technology to provide two or more functionalities in a single conformal coating on a low surface energy microporous substrate without occluding the micropores of the substrate.

EP 0 372 697 (Haro) discloses an oil leakage sensor formed from a porous water repellent resin containing carbon particles.

EP 1 239 000 (Arcella and Ghielmi) discloses providing porous hydrophilic membranes having a porous inset on which an ionomer is deposited.

US 2004/0213918 (Mikhael) discloses coatings for porous materials, such as fabrics

WO 00/66655 (Exsted) discloses coating materials, such as porous materials, with melamine resin.

US 6,326,326 (Xiangdong Feng and Fryxell) discloses an organised assembly of functional molecules attached within mesopores of mesoporous materials such as silica, titania and zirconia.

### SUMMARY OF THE INVENTION

According to aspects of the present invention, there is provided a composite comprising a microporous material and a multi-functional coating and a method for forming a multi-functional coating on a microporous material according to the appended claims.

The present invention overcomes the limitation of the prior art by providing a single conformal coating on a microporous substrate, such as a low surface energy microporous substrate, which provides multiple functionalities to the underlying microporous material, while still maintaining porosity within at least a portion of the microporous substrate.

### BRIEF DESCRIPTION OF THE FIGURES

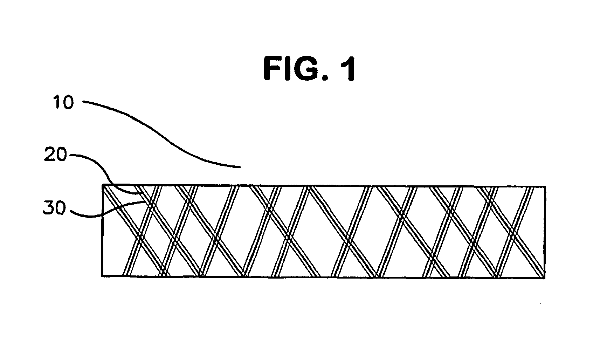

Fig. 1 is a schematic sectional view of a coated microporous polymer layer.

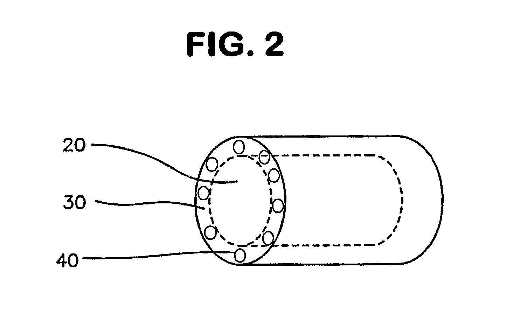

Fig. 2 is a schematic angled cross-sectional view of a coated fibril of a coated, expanded polytetrafluoroethylene membrane.

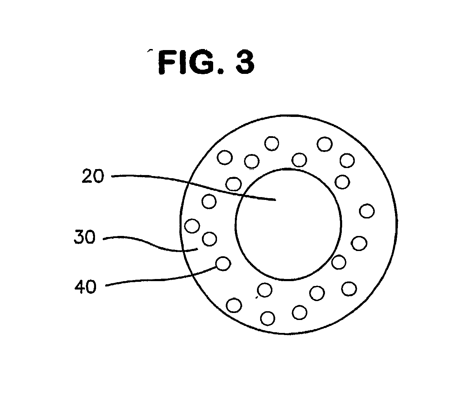

Fig. 3 is a schematic full cross-sectional view of a coated fibril of a coated, expanded polytetrafluoroethylene membrane.

### DETAILED DESCRIPTION OF INVENTION

In the present invention, a microporous coated substrate is produced wherein the coating contains two or more functionalities. Specifically, the multi-functional coating includes at least two additives and each additive provides at least one functionality. In one embodiment, the first additive may form a film around, encompass or otherwise bind the second additive to the microporous structure. The first additive provides some functionality to the composite, such as hydrophobicity, hydrophilicity, etc., and the second additive provides some further functionality to the composite. In another aspect of this invention, the multi-functional coating combines a first functional additive such as but not limited to surface energy modifying (e.g., lowering, etc.) polymeric binders with additional functional additives wherein the resulting multi-functional coating exists on the pore surfaces of the microporous substrate. As used herein, the term "functional additive" is intended to refer to any additional material which renders further functionality to the coated microporous substrate than what otherwise exists in the absence of the functional additive, such as by changing the chemical, physical or mechanical properties of the microporous substrate. One class of polymeric binders of this invention are fluoropolymer binders since they can be used to alter the surface energy or wetting characteristics of the otherwise inherently hydrophobic expanded PTFE substrate. Surprisingly, additional functional additives can be included in the polymeric binder mix so that the resultant coated microporous substrate exhibits both a surface energy change due to the fluoropolymer binder but also a second functional change due to the additional functional additive. While surface energy altering polymeric binders are of particular interest in this invention, other embodiments encompass incorporating a non-polymeric binder. In such embodiments where a non-polymeric binder is used, the multi-functionality results from the incorporation of more than one functional additive onto the surfaces of the microporous substrate, where at least one of the functional additives also acts as a binder. As used herein, the term "binder" refers to a material which adheres or otherwise attaches to at least a portion of the underlying microporous structure arid assists in retention of the second functional component.

The multi-functional coatings of this invention are applied to the microporous substrate in accordance with the method of the appended claims which produces the desired coating uniformity on the surfaces of the microstructure and preferably does not occlude the pores of the microporous substrate. One aspect of this invention dissolves the functional polymeric binder in an organic solvent into which the additional functional additives, such as particles are added. The organic solvent selected must be capable of wetting the microporous substrate surface. This multi-functional-additive, solvent mix is then coated onto the microporous substrate and the solvent vaporized. The functional polymeric binder and the functional additive particles contained therein are deposited onto substrate surface in order to create a desired effect. Examples of functions that can be provided in such a multi-functional coating include, but are not limited to, color change in the case of a pigment, or hydrophilicity change in the case of pH sensitive materials, and infrared reflectivity changes in the case of infrared absorbing materials. Carbon particles are of particular interest in applications where a change in an electromagnetic spectral response or electric or thermal conductivity of the substrate is desired. A critical aspect of this invention is that the resultant microporous substrate must exhibit multiple functionalities such as that of the surface energy altering polymeric binder and a change in spectral, electromagnetic, or thermal response.

One important aspect of this invention is that the coating mix must be able to wet the substrate to which it is applied. In the case of microporous PTFE, the coating mix typically should have a surface tension around 30 dynes/cm or less.

In another embodiment of this invention, a multi-functional coating can be produced using an aqueous wetting system. In this embodiment, a polymeric binder and a second functional additive are stabilized in an aqueous wetting system which is then coated onto the desired microporous substrate. An aqueous wetting system containing a water insoluble alcohol (e.g., C₅-C₁₀ linear backbone) emulsified by a surfactant is one suitable system. The surfactant or surfactants can be selected to be compatible with the additives and any surfactants that may be used to stabilize the additives. The water is vaporized and the multi-functional coating is produced on the surfaces of the microporous substrate. Suitable functional additives include materials which have suitable stability to be delivered and which are either soluble in the wetting system (either the water or wetting agent) or dispersible in the wetting system. In one exemplary embodiment of the invention, if the substrate is a polymer layer that is not naturally oleophobic, it can be rendered oleophobic by incorporating within the aqueous delivery system a functional additive which is an oleophobic material. This unique feature of the invention provides significant advantages over conventional coated materials, in that the present invention can be tailored to readily facilitate coating at least a portion of the pore walls of the substrate.

Suitable microporous materials are selected from polytetrafluoroethylene and expanded polytetrafluoroethylene. In instances where retention of air permeability or high breathability is desired, the present invention should be designed to preserve the open microporous structure, as filling the micropores may destroy or severely lessen the water-vapor transmitting property of the microporous substrate. Thus, the walls defining the voids in the microporous polymer preferably have only a very thin coating in such an embodiment. Moreover, to maintain flexibility of the substrate, the coating of the functional material should be sufficiently thin to not impact the flexibility of the substrate when coated.

Common oleophobic functional additive compositions suitable for this invention include oleophobic fluorocarbon compounds. For example, the fluorocarbon can be one that contains perfluoroalkyl groups CF₃ --(CF₂)ₙ-- , where n is ≥0. The following compounds or classes of oleophobic materials, while not exhaustive, can be used:
Apolar perfluoropolyethers having CF₃ side groups, such as Fomblin Y-Ausimont; Krytox-DuPont;
Mixtures of apolar perfluoroethers with polar monofunctional perfluoropolyethers PFPE (Fomblin and Galden MF grades available from Ausimont);
Polar water-insoluble PFPE such as, for example, Galden MF with phosphate, silane, or amide, end groups;
Mixtures of apolar PFPE with fluorinated alkyl methacrylates and fluorinated alkyl acrylate as monomer or in polymer form.

The above-mentioned compounds can also optionally be crosslinked by, for example, UV radiation in aqueous form solution or emulsion.

The following polymeric particle solutions, while again not exhaustive, can also be used:
▪ Microemulsions based on PFPE (see EP 0615779, Fomblin Fe20 microemulsions);
▪ Emulsions based on copolymers of siloxanes and perfluoroalkyl- substituted (meth)acrylates (Hoechst);
▪ Emulsions based on perfluorinated or partially fluorinated co- or terpolymers, one component containing at least hexafluoropropene or perfluoroalkyl vinyl ether;
▪ Emulsions based on perfluoroalkyl-substituted poly(meth)acrylates and copolymers (products of Asahi Glass, Hoechst, DuPont and others).
▪ Microemulsions based on perfluoroalkyl-substituted poly(meth)acrylates and copolymers (WU, U.S. Pat. No. 5,539,072; U.S. Pat. No. 5,460,872);

The concentration of the functional material provided by this invention can vary greatly depending on the desired outcome. When an oleophobic fluoropolymer is used as the functional additive material, such as but not limited to, polymers having --(CF₂)ₙ --CF₃ pendant groups, functional materials of this type can impart very low surface energy values to the polymer and thus impart good oil and water resistance properties. Representative oleophobic polymers can be made from organic monomers having pendant perfluoroalkyl groups. These include fluoroalkyl acrylates and fluoroalkyl methacrylates having terminal perfluoroalkyl groups of the formula: 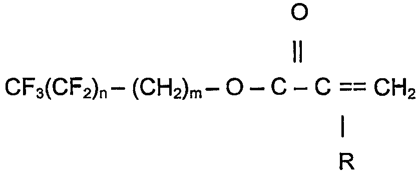 wherein n is a cardinal number of 1-21, m is a cardinal number of 1-10, and R is H or CH₃ ; fluoroalkyl aryl urethanes, fluoroalkyl allyl urethanes, fluoroalkyl urethane acrylates; fluoroalkyl acrylamides; fluoroalkyl sulfonamide acrylates and the like. When a low surface energy coating is desired, concentrations from about 1% wt. up to about 30% wt. solids of oleophobic material based on total coating mix weight may be effective. When coating microporous substrates, the concentration of the oleophobic functional material preferably is between about 3% wt. up to about 12% wt. based on total coating mix weight.

Alternate embodiments of this invention include other functional additive materials. The present invention can be used to deliver particulate functional materials to surfaces, provided that the particulate can be dispersed in the wetting system. In some instances, it may be advantageous to disperse the particulates in a dispersing agent which can subsequently be dispersed in the wetting system. In applications involving particulates, such as carbon, concentrations ranging from about 0.1 % wt. up to about 5% wt. based on total mix weight are often appropriate to impart the desired functional effect of this additional functional additive.

The optional functional material of the present invention may also be materials that are either soluble in the inventive aqueous wetting system or dispersible in the inventive aqueous wetting system. The list of soluble materials that can be used in conjunction with the present invention include but are not limited to polyacrylic acid, polyacrylamide, melamine, polyvinyl alcohol, salts, and dyes. The list of dispersible materials that can be used in conjunction with the present invention include but are not limited to fluoroacrylates, polystyrene, pigments, carbon black, and aluminum oxide. One requirement for these dispersible materials is that the particle size be sufficiently small so that then can physically enter the pores of the microporous substrate to which they are being applied. When the microporous substrate is inherently hydrophobic, such a coating can change the surface characteristic from hydrophobic to hydrophilic.

In additional embodiments of this invention, a wide range of functionalities can be incorporated into the low surface energy microporous substrate. Some examples include but are not limited to functional additives that can be provided to change water absorption, hydrophobicity, oleophobicity, light shielding, color change, flame resistance and fire retardancy, antimicrobial, antistatic, elasticity, infrared and near infrared absorption, UV absorption, catalysts, photo catalysts, biocompatibility, and controlled release of therapeutic agents. One primary aspect of this invention is the ability to provide two or more of these functionalities in the coating system.

In order to achieve some of the above embodiments, the functional additives that can be incorporated into these inventive constructs include, but are not limited to, carbon, metals, metal oxides (e.g., TiO2), fluoropolymers, acrylates, polyacrylic acid, heparin, permetherin, cerium oxide, benzophenone, nanoparticles, carbon nanotubes, quantum dots, cadmium selenium, lead selenium, dyes and pigments, antimony doped indium tin oxide.

Other useful permutations of this invention are also encompassed within the breadth of coated microporous substrates having a single coating with multiple functionalities provided to the substrate via the single coating. Additional advantages of this invention are that it can be used to provide both acidic and basic reactivities onto a single microporous substrate. In addition, because the addition of some particles may reduce the water entry pressure of a microporous substrate, this invention provides a way to maintain or even enhance the waterproofness of a microporous substrate while also providing the functionality of an additional functional additive or particulate. Additional functional additives of interest include but are not limited to metals, e.g. silver, metal carbonates, e.g. copper or zinc carbonates, metal oxides, e.g. cuprous oxide or molybdenum oxide, or organic materials such as triethylenediamine.

### DEFINITIONS

For the purposes of this application the following terms shall be recognized to have the meaning set forth below unless otherwise indicated:
"Air permeable" means that airflow is observed as determined by the Gurley test described below. It will be appreciated by one of skill in the art that an air permeable material will also be moisture vapor permeable.
"Air-impermeable" means that no airflow is observed for at least two minutes as determined by the Gurley test described below.
"Hydrophilic" material denotes a porous material whose pores become filled with liquid water when subjected to liquid water at a pressure of less than or equal to 1.0 psi.
"Microporous" term is used to denote a continuous layer of material comprised of interconnecting pores which create a passageway extending from one surface of the layer to the opposite surface of the layer.
"Oleophobic" means a material that has an oil rating of 1 or more, as measured by the Oil Repellency Test.
"Coating" refers to the presence of the material on at least a portion of a substrate.
"Conformal coating" refers to a coating which matches or follows the topography of the underlying substrate.

### TEST PROCEDURES

### Air Permeability/Impermeability--Gurley Number Test

### Gurley numbers were obtained as follows:

The resistance of samples to air flow was measured by a Gurley densometer (ASTM) D726-58) manufactured by W. & L. E. Gurley & Sons. The results are reported in terms of Gurley Number, which is the time in seconds for 100 cubic centimeters of air to pass through 6.54 cm² of a test sample at a pressure drop of 1.215 kN/m² of water. A material is air-impermeable if no air passage is observed over a 120 second interval.

### Oil Repellency Test

In these tests, oil rating was measured using the AATCC Test Method 118-1983 when testing film composites. The oil rating of a film composite is the lower of the two ratings obtained when testing the two sides of the composite. The higher the number, the better the oil repellency. A value of greater than 1, preferably 2 or more, more preferably 4 or more, is preferred.

The test is modified as follows when testing laminates of the film composite with a textile. Three drops of the test oil are placed on the textile surface. A glass plate is placed directly on top of the oil drops. After 3 minutes, the reverse side of the laminate is inspected for a change in appearance indicating penetration or staining by the test oil. The oil rating of the laminate corresponds to the highest number oil that does not wet through the laminate or cause visible staining from the reverse side of oil exposure. The higher the number, the better the oil repellency. A value of greater than 1, preferably 2 or more, more preferably 4 or more, and most preferably, 6 or more, is preferred.

### Average Reflectance Test for Visible and Near Infrared Spectra

Spectral reflectance data is determined on the technical face of the sample (i.e., the camouflage printed side of the textile, laminate, or composite) and is obtained from 400 to 1100 nanometers (nm) at 20 nm intervals on a spectrophotometer (Data Color CS-5) (capable of measuring reflectance at wavelengths of 400-1100nm or greater) relative to a barium sulfate standard. The spectral bandwidth is set at less than 26 nm at 860 nm. Reflectance measurements are made with the monochromatic mode of operation.

The samples were measured as a single layer, backed with six layers of the same fabric and shade. Measurements were taken on a minimum of two different areas and the data averaged. The measured areas were chosen to be at least 6-inches away from the selvage (edge). The specimen was viewed at an angle no greater than 10 degrees from the normal, with the specular component included.

Instrument: Photometric accuracy of the spectrophotometer shall be within 1 percent and wavelength accuracy within 2 nm. The standard aperture size used in the color measurement device shall be 1.0 to 1.25 inches in diameter for Woodland and Desert camouflage and 0.3725 inches in diameter for the Universal camouflage, MARPAT Woodland and MARPAT Desert. Any color having spectral reflectance values falling outside the limits at four or more of the wavelengths specified in MIL-DTL-31011A, MIL-DTL-31011B, or MIL-PRF-32142 shall be considered a test failure.

Results are reported in terms of average reflectance for a particular wavelength range, unless otherwise specifically noted.

### EXAMPLES

### Example 1

Example 1 was run to demonstrate that a low surface energy microporous substrate could be produced that was oleophobic, air permeable, and near infrared suppressive. A microporous ePTFE membrane measuring 0.001 inch thick (0.2 µm nominal pore size, mass of 20 g/m², obtained from W. L. Gore & Associates, Inc.) was coated with carbon black (Vulcan XC72, Cabot Corporation, Boston, MA) using a fluorocarbon polymer binder and wetting agents. The binder system was formulated by mixing 2.6g of Witcolate ES2 (30% solution) (obtained from Witco Chemicals/Crompton Corporation, Middlebury, CT), 1.2g of 1-Hexanol (Sigma-Aldrich Chemical Corporation, St. Louis, MO), and 3.0g of fluoropolymer (AG8025, Asahi Glass, Japan) in 13.2g of deionized water. 0.015g of carbon black was added to the binder system. The mixture was sonicated for 1 minute. The membrane was hand coated with the mixture using a roller to a coating weight of approximately 3 g/m². The coated membrane was cured at 190°C for 2.5 minutes.

The resultant microporous expanded PTFE substrate had a Gurley number of about 29 seconds to about 49 seconds and a moisture vapor transmission rate of about 45,942 g/m² (24 hours). The oil rating was 8. And this example gave an average reflection in the near infrared wavelength range of 720 nm to 1100 nm that was substantially reduced compared to the single functionality, control sample which was only oleophobic. Clearly, this example shows how a multi-functional coating system can be used to produce an air-permeable, microporous substrate having multiple functionalities.

### Comparative A

Comparative A was produced similarly to Example 1 with the exception that no carbon was included in the fluorocarbon polymer binder and wetting agents. Average reflectance of the constructions was measured in the 720-1100nm wavelength ranges. Results are reported as "Comparative A" in Table 1.

**Table 1**

| Example No. | Sample | % carbon | Average Reflection (720 nm-1100nm) |
|---|---|---|---|
| Comparative A | Fluorocarbon coated ePTFE | 0 | 83.3 |
| 1 | Fluorocarbon/Carbon coated ePTFE | 0.075 | 26.8 |

### Example 2

To demonstrate the present invention is capable of providing both a different aesthetic color and oleophobicity (Example 2), the following composition was prepared (1.5 g of Witcolate ES-2 (Witco Chemical Co.), 0.6 g of 1-hexanol, 6.7 g of de-ionized water, 1.5 g of AG8025 (Asahi Glass Co. Ltd.), and 0.2 g of blue dye (Techtilon Blue). These ingredients were added in the order of: water, surfactant, and alcohol. To this aqueous system, the remaining functional additives were added. This aqueous system was mixed by shaking for approximately one minute at ambient conditions. This aqueous mixture was applied to one side of a 20 g/m² ePTFE membrane. The aqueous mixture wet the ePTFE substrate within a second. The coated membrane was cured in a lab oven at 190°C for 2 min. An air permeable blue colored oleophobic membrane resulted. Air permeability was confirmed by the coated membrane having a Gurley measurement of about 28 seconds. The oil rating of the coated membrane was 8.

### Example 3

To demonstrate that a pH indicating coating and pH switchable hydrophilicity could be imparted to a microporous substrate. A mix of the following composition was prepared (1.3 g of Witcolate ES-2 (Witco Chemical Co.), 0.6g of 1-hexanol, 6.3g of de-ionized water, 2.0g of polyacrylic acid (Aldrich Chemical, 19203-1), and 0.3g of bromophenol blue. This mix immediately wet a 20 g/m² ePTFE membrane. The coated membrane was cured in a lab oven at 190 C for 2 min. An air permeable yellow colored membrane resulted. When exposed to a water droplet, this membrane remained yellow and did not wet even under light finger pressure. When exposed to a NaOH solution (∼pH 10), the color of the membrane changed from yellow to blue and the membrane was penetrated by the dilute NaOH solution under light finger pressure. This membrane has hydrophilic properties towards basic solution and has a pH indicator to show the presence of a basic solution.

This example provided the additional functional element of light blocking. When the uncoated membrane was placed on a page of writing under normal indoor lighting conditions, the writing was visible. When this multi-functional coated membrane was placed on the same page of writing under the same lighting conditions, the writing was not visible.

## Claims

1. A composite comprising:
a microporous material having pore walls and open porosity therein, said microporous material being selected from polytetrafluoroethylene and expanded polytetrafluoroethylene; and
a multi-functional coating on at least a portion of the pore walls of the microporous material, said multi-functional coating comprising a first functional additive and at least one additional functional additive,
wherein the microporous material retains at least some open porosity in the coated portion of the microporous material.

2. The composite of claim 1 wherein said composite is microporous.

3. The composite of claim 1 wherein the first functional additive comprises fluoroacrylate.

4. The composite of claim 1 wherein the at least one additional functional additive is a filler.

5. The composite of claim 4 wherein the filler is particulate.

6. The composite of claim 4 wherein the filler comprises carbon.

7. The composite of claim 4 wherein the filler comprises at least one material selected from the group consisting of a pigment, a metal, a metal oxide, and a mixed metal oxide.

8. The composite of claim 1 wherein the first functional additive comprises a polymer, at least one surfactant in an amount of up to about 50% by weight of the coating based on total coating weight, and at least one water-insoluble alcohol having a C₅-C₁₀ linear backbone in an amount of up to about 30% by weight of the aqueous mixture used to coat the microporous material.

9. The composite of claim 1, wherein said composite further contains at least one additional coating.

10. The composite of claim 9, wherein said at least one further coating does not fill said pores of said microporous material.

11. The composite of claim 9, wherein said at least one further coating substantially fills at least a portion of said pores of said microporous material.

12. The composite of claim 1 wherein the microporous material comprises expanded polytetrafluoroethylene.

13. The composite of claim 1 wherein the first functional additive is oleophobic.

14. The composite of claim 1 wherein the first functional additive is a fluoropolymer.

15. The composite of claim 1 wherein the first functional additive comprises polyfluoroacrylate.

16. The composite of claim 1 wherein the first functional additive comprises styrene-butadiene copolymer.

17. The composite of claim 1 wherein the first functional additive is hydrophilic.

18. The composite of claim 1 wherein the first functional additive comprises polyacrylic acid.

19. The composite of claim 1 wherein the first functional additive is sodium polyacrylic acid.

20. The composite of claim 1 wherein the first functional additive is polyvinyl alcohol.

21. The composite of claim 1 wherein the first functional additive is polyethyleneimine.

22. The composite of claim 1 wherein the first functional additive comprises a copolymer of acrylic acid.

23. The composite of claim 1 wherein the first functional additive comprises a copolymer of acrylamide.

24. The composite of claim 1 wherein the first functional additive comprises a surfactant.

25. The composite of claim 1 wherein the first functional additive is a crosslinkable material.

26. The composite of claim 1 wherein the first functional additive is elastic.

27. The composite of claim 8 wherein the at least one additional functional additive is particulate.

28. the composite of claim 1 wherein the at least one additional functional additive is carbon.

29. The composite of claim 1 wherein the at least one additional functional additive is antimony oxide.

30. The composite of claim 1 or 4 wherein the at least one additional functional additive is present at less than or equal to 10%wt. based on total coating weight.

31. The composite of claim 1 or 4 wherein the at least one additional functional additive is present at less than or equal to 5%wt. based on total coating weight.

32. The composite of claim 1 or 4 wherein the at least one additional functional additive is present at less than or equal to 1%wt. based on total coating weight.

33. The composite of claim 1 or 4 wherein the at least one additional functional additive is present at less than or equal to 0.5%wt. based on total coating weight.

34. The composite of claim 1 wherein at least one of said first functional additive and said at least one additional functional additive binds said multi-functional coating to said microporous material.

35. The composite of claim 1 wherein the pore walls have only a very thin coating thereon to preserve the open microporous structure and preserve the water-vapour transmitting property of the microporous material.

36. The composite of claim 1 wherein at least one of the functional additives is dispersible in an aqueous wetting system and the particle size of the dispersible material is sufficiently small so that the material can physically enter the pores of the microporous material.

37. The composite of claim 1 wherein the coating follows the topography of the microporous material and uniformly coats the pore walls.

38. A method for forming a multi-functional coating on a microporous material, said microporous material being selected from polytetrafluoroethylene and expanded polytetrafluoroethylene, comprising:
preparing a solvent wetting mix;
adding a first functional additive and at least one additional functional additive to the wetting mix;
coating said microporous material with said solvent wetting mix; and heating the coated microporous material and forming a coating thereon such that the coating is formed on at least a portion of the pore walls of the microporous structure and the structure retains at least some open porosity in the coated portion of the microporous material.

39. The method of claim 38, wherein the wetting mix is an aqueous wetting mix.

## Patentansprüche

1. Verbundstoff umfassend:
ein mikroporöses Material, das Porenwände und offene Porosität darin aufweist, wobei das mikroporöse Material unter Polytetrafluorethylen und expandiertem Polytetrafluorethylen ausgewählt wird; und
eine multifunktionelle Beschichtung auf mindestens einem Teil der Porenwände des mikroporösen Materials, wobei die multifunktionelle Beschichtung ein erstes funktionelles Zusatzmittel und mindestens ein zusätzliches funktionelles Zusatzmittel umfasst,
wobei das mikroporöse Material mindestens eine gewisse offene Porosität in dem beschichteten Teil des mikroporösen Materials beibehält.

2. Verbundstoff nach Anspruch 1, wobei der Verbundstoff mikroporös ist.

3. Verbundstoff nach Anspruch 1, wobei das erste funktionelle Zusatzmittel Fluoracrylat umfasst.

4. Verbundstoff nach Anspruch 1, wobei das mindestens eine zusätzliche funktionelle Zusatzmittel ein Füllstoff ist.

5. Verbundstoff nach Anspruch 4, wobei der Füllstoff teilchenförmig ist.

6. Verbundstoff nach Anspruch 4, wobei der Füllstoff Kohlenstoff umfasst.

7. Verbundstoff nach Anspruch 4, wobei der Füllstoff mindestens ein Material umfasst ausgewählt aus der Gruppe bestehend aus einem Pigment, einem Metall, einem Metalloxid und einem gemischten Metalloxid.

8. Verbundstoff nach Anspruch 1, wobei das erste funktionell Zusatzmittel ein Polymer, mindestens ein Tensid in einer Menge von bis zu etwa 50 Gew.-% der Beschichtung, auf das gesamte Beschichtungsgewicht bezogen, und mindestens einen wasserunlöslichen Alkohol, der eine lineare C₅-C₁0-Rückgratkette aufweist, in einer Menge von bis zu etwa 30 Gew.-% der wässrigen Mischung umfasst, die zum Beschichten des mikroporösen Materials verwendet wird.

9. Verbundstoff nach Anspruch 1, wobei der Verbundstoff des Weiteren mindestens eine zusätzliche Beschichtung enthält.

10. Zusammensetzung nach Anspruch 9, wobei die mindestens eine weitere Beschichtung die Poren des mikroporösen Materials nicht füllt.

11. Verbundstoff nach Anspruch 9, wobei die mindestens eine weitere Beschichtung mindestens einen Teil der Poren des mikroporösen Materials im Wesentlichen füllt.

12. Verbundstoff nach Anspruch 1, wobei das mikroporöse Material expandiertes Polytetrafluorethylen umfasst.

13. Verbundstoff nach Anspruch 1, wobei das erste funktionelle Zusatzmittel oleophob ist.

14. Verbundstoff nach Anspruch 1, wobei das erste funktionelle Zusatzmittel ein Fluorpolymer ist.

15. Verbundstoff nach Anspruch 1, wobei das erste funktionelle Zusatzmittel Polyfluoracrylat umfasst.

16. Verbundstoff nach Anspruch 1, wobei das erste funktionelle Zusatzmittel Styrol-Butadien-Copolymer umfasst.

17. Verbundstoff nach Anspruch 1, wobei das erste funktionelle Zusatzmittel hydrophil ist.

18. Verbundstoff nach Anspruch 1, wobei das erste funktionelle Zusatzmittel Polyacrylsäure umfasst.

19. Verbundstoff nach Anspruch 1, wobei das erste funktionelle Zusatzmittel Natriumpolyacrylsäure ist.

20. Verbundstoff nach Anspruch 1, wobei das erste funktionelle Zusatzmittel Polyvinylalkohol ist.

21. Verbundstoff nach Anspruch 1, wobei das erste funktionelle Zusatzmittel Polyethylenimin ist.

22. Verbundstoff nach Anspruch 1, wobei das erste funktionelle Zusatzmittel ein Copolymer von Acrylsäure umfasst.

23. Verbundstoff nach Anspruch 1, wobei das erste funktionelle Zusatzmittel ein Copolymer von Acrylamid umfasst.

24. Verbundstoff nach Anspruch 1, wobei das erste funktionelle Zusatzmittel ein Tensid umfasst.

25. Verbundstoff nach Anspruch 1, wobei das erste funktionelle Zusatzmittel ein vernetzbares Material ist.

26. Verbundstoff nach Anspruch 1, wobei das erste funktionelle Zusatzmittel elastisch ist.

27. Verbundstoff nach Anspruch 8, wobei das mindestens eine zusätzliche funktionelle Zusatzmittel teilchenförmig ist.

28. Verbundstoff nach Anspruch 1, wobei das mindestens eine zusätzliche funktionelle Zusatzmittel Kohlenstoff ist.

29. Verbundstoff nach Anspruch 1, wobei das mindestens eine zusätzliche funktionelle Zusatzmittel Antimonoxid ist.

30. Verbundstoff nach Anspruch 1 oder 4, wobei das mindestens eine zusätzliche funktionelle Zusatzmittel in einer Menge von weniger als oder gleich 10 Gew.-%, auf das gesamte Beschichtungsgewicht bezogen, vorliegt.

31. Verbundstoff nach Anspruch 1 oder 4, wobei das mindestens eine zusätzliche funktionelle Zusatzmittel in einer Menge von weniger als oder gleich 5 Gew.-%, auf das gesamte Beschichtungsgewicht bezogen, vorliegt.

32. Verbundstoff nach Anspruch 1 oder 4, wobei das mindestens eine zusätzliche funktionelle Zusatzmittel in einer Menge von weniger als oder gleich 1 Gew.-%, auf das gesamte Beschichtungsgewicht bezogen, vorliegt.

33. Verbundstoff nach Anspruch 1 oder 4, wobei das mindestens eine zusätzliche funktionelle Zusatzmittel in einer Menge von weniger als oder gleich 0,5 Gew.-%, auf das gesamte Beschichtungsgewicht bezogen, vorliegt.

34. Verbundstoff nach Anspruch 1, wobei mindestens eines des ersten funktionellen Zusatzmittels und des mindestens einen zusätzlichen funktionellen Bindemittels die multifunktionelle Beschichtung an das mikroporöse Material bindet.

35. Verbundstoff nach Anspruch 1, wobei die Porenwände nur eine sehr dünne Beschichtung darauf aufweisen, um die offene mikroporöse Struktur zu bewahren und die Wasserdampfdurchlässigkeitseigenschaft des mikroporösen Materials zu bewahren.

36. Verbundstoff nach Anspruch 1, wobei mindestens ein funktionelles Zusatzmittel in einem wässrigen Benetzungssystem dispergierbar ist und die Teilchengröße des dispergierbaren Materials ausreichend klein ist, so dass das Material physisch in die Poren des mikroporösen Materials eintreten kann.

37. Zusammensetzung nach Anspruch 1, wobei die Beschichtung der Topographie des mikroporösen Materials folgt und die Porenwände gleichmäßig beschichtet.

38. Verfahren zum Bilden einer multifunktionellen Beschichtung auf einem mikroporösen Material, wobei das mikroporöse Material unter Polytetrafluorethylen und expandiertem Polytetrafluorethylen ausgewählt wird, umfassend:
das Herstellen einer Lösungsmittelbenetzungsmischung;
das Hinzugeben eines ersten funktionellen Zusatzmittels und mindestens eines zusätzlichen funktionellen Zusatzmittels zu der Benetzungsmischung;
das Beschichten des mikroporösen Materials mit der Lösungsmittelbenetzungsmischung und das Erhitzen des beschichteten mikroporösen Materials und Bilden einer Beschichtung darauf, derart, dass die Beschichtung auf mindestens einem Teil der Porenwände des mikroporösen Gebildes gebildet wird und das Gebilde mindestens eine gewisse offene Porosität in dem beschichteten Teil des mikroporösen Materials beibehält.

39. Verfahren nach Anspruch 38, wobei die Benetzungsmischung eine wässrige Benetzungsmischung ist.

## Revendications

1. Composite comprenant:
un matériau microporeux ayant des parois poreuses et une porosité ouverte à l'intérieur, ledit matériau microporeux étant sélectionné parmi le polytétrafluoroéthylène et le polytétrafluoroéthylène expansé; et
un revêtement multifonctionnel sur au moins une portion des parois poreuses du matériau microporeux, ledit revêtement multifonctionnel comprenant un premier additif fonctionnel et au moins un additif fonctionnel supplémentaire,
dans lequel le matériau microporeux conserve au moins une certaine porosité ouverte dans la portion enduite du matériau microporeux.

2. Composite selon la revendication 1, dans lequel ledit composite est microporeux.

3. Composite selon la revendication 1, dans lequel le premier additif fonctionnel comprend un acrylate fluoré.

4. Composite selon la revendication 1, dans lequel le au moins un additif fonctionnel supplémentaire est une charge.

5. Composite selon la revendication 4, dans lequel la charge se présente sous forme de particule.

6. Composite selon la revendication 4, dans lequel la charge comprend du carbone.

7. Composite selon la revendication 4, dans lequel la charge comprend au moins un matériau sélectionné parmi le groupe constitué d'un pigment, d'un métal, d'un oxyde métallique, et d'un oxyde métallique mixte.

8. Composite selon la revendication 1, dans lequel le premier additif fonctionnel comprend un polymère, au moins un tensioactif en une quantité allant jusqu'à environ 50 % en poids du revêtement sur la base du poids total du revêtement, et au moins un alcool insoluble dans l'eau ayant un squelette linéaire en C₅ à C₁₀ en une quantité allant jusqu'à environ 30 % en poids du mélange aqueux utilisé pour le revêtement du matériau microporeux.

9. Composite selon la revendication 1, dans lequel ledit composite contient en outre au moins un revêtement supplémentaire.

10. Composite selon la revendication 9, dans lequel ledit au moins un revêtement supplémentaire ne remplit pas lesdits pores dudit matériau microporeux.

11. Composite selon la revendication 9, dans lequel ledit au moins un revêtement supplémentaire remplit essentiellement au moins une portion desdits pores dudit matériau microporeux.

12. Composite selon la revendication 1, dans lequel le matériau microporeux comprend du polytétrafluoroéthylène expansé.

13. Composite selon la revendication 1, dans lequel le premier additif fonctionnel est oléophobe.

14. Composite selon la revendication 1, dans lequel le premier additif fonctionnel est un polymère fluoré.

15. Composite selon la revendication 1, dans lequel le premier additif fonctionnel comprend un poly(acrylate fluoré).

16. Composite selon la revendication 1, dans lequel le premier additif fonctionnel comprend un copolymère de styrène-butadiène.

17. Composite selon la revendication 1, dans lequel le premier additif fonctionnel est hydrophile.

18. Composite selon la revendication 1, dans lequel le premier additif fonctionnel comprend du poly(acide acrylique).

19. Composite selon la revendication 1, dans lequel le premier additif fonctionnel est du poly(acide acrylique) sodique.

20. Composite selon la revendication 1, dans lequel le premier additif fonctionnel est un poly(alcool de vinyle).

21. Composite selon la revendication 1, dans lequel le premier additif fonctionnel est un polyéthylèneimine.

22. Composite selon la revendication 1, dans lequel le premier additif fonctionnel comprend un copolymère d'acide acrylique.

23. Composite selon la revendication 1, dans lequel le premier additif fonctionnel comprend un copolymère d'acrylamide.

24. Composite selon la revendication 1, dans lequel le premier additif fonctionnel comprend un tensioactif.

25. Composite selon la revendication 1, dans lequel le premier additif fonctionnel est un matériau réticulable.

26. Composite selon la revendication 1, dans lequel le premier additif fonctionnel est élastique.

27. Composite selon la revendication 8, dans lequel le au moins un additif fonctionnel supplémentaire se présente sous forme de particule.

28. Composite selon la revendication 1, dans lequel le au moins un additif fonctionnel supplémentaire est du carbone.

29. Composite selon la revendication 1, dans lequel le au moins un additif fonctionnel supplémentaire est l'oxyde d'antimoine.

30. Composite selon la revendication 1 ou 4, dans lequel le au moins un additif fonctionnel supplémentaire est présent en une quantité inférieure ou égale à 10 % en pds sur la base du poids total du revêtement.

31. Composite selon la revendication 1 ou 4, dans lequel le au moins un additif fonctionnel supplémentaire est présent en une quantité inférieure ou égale à 5 % en pds sur la base du poids total du revêtement.

32. Composite selon la revendication 1 ou 4, dans lequel le au moins un additif fonctionnel supplémentaire est présent en une quantité inférieure ou égale à 1 % en pds sur la base du poids total du revêtement.

33. Composite selon la revendication 1 ou 4, dans lequel le au moins un additif fonctionnel supplémentaire est présent en une quantité inférieure ou égale à 0,5 % en pds sur la base du poids total du revêtement.

34. Composite selon la revendication 1, dans lequel au moins l'un dudit premier additif fonctionnel et dudit au moins un additif fonctionnel supplémentaire lie ledit revêtement multifonctionnel audit matériau microporeux.

35. Composite selon la revendication 1, dans lequel les parois poreuses ont uniquement un très fin revêtement dessus pour préserver la structure microporeuse ouverte et préserver la propriété de transmission de vapeur d'eau du matériau microporeux.

36. Composite selon la revendication 1, dans lequel au moins l'un desdits additifs fonctionnels est dispersible dans un système d'humidification aqueux et la taille de particule du matériau dispersible est suffisamment petite afin que le matériau puisse physiquement pénétrer dans les pores du matériau microporeux.

37. Composite selon la revendication 1, dans lequel le revêtement suit la topographie du matériau microporeux et enduit uniformément les parois poreuses.

38. Procédé de formation d'un revêtement multifonctionnel sur un matériau microporeux, ledit matériau microporeux étant sélectionné parmi le polytétrafluoroéthylène et le polytétrafluoroéthylène expansé, comprenant:
la préparation d'un mélange d'humidification à base de solvant;
l'addition d'un premier additif fonctionnel et d'au moins un additif fonctionnel supplémentaire au mélange d'humidification;
le revêtement dudit matériau microporeux grâce audit mélange d'humidification à base de solvant; et le chauffage du matériau microporeux enduit et la formation d'un revêtement dessus de sorte que le revêtement soit formé d'au moins une portion des parois poreuses de la structure microporeuse et que la structure conserve au moins une certaine porosité ouverte dans la portion enduite du matériau microporeux.

39. Procédé selon la revendication 38, dans lequel le mélange d'humidification est un mélange d'humidification aqueux.
